# FASCICULE DE BREVET EUROPEEN

(11) **EP 1 633 975 B1**
(45) Date de publication et mention de la délivrance du brevet: **01.04.2009**
(21) Numéro de dépôt: 04767216.7
(22) Date de dépôt: 01.06.2004
(51) Int. Cl.: F02N 15/00, F02N 11/00, H02K 5/10, H02K 5/22

(54) **DISPOSITIF DE POSITIONNEMENT ANGULAIRE D'UNE CULASSE DE DEMARREUR PAR RAPPORT A SON SUPPORT**
WINKELPOSITIONIERUNGSVORRICHTUNG FÜR EINEN ZYLINDERKOPF EINES ANLASSERS RELATIV ZU SEINEM TRÄGER
DEVICE FOR ANGULARLY POSITIONING A STARTER CYLINDRICAL HEAD WITH RESPECT TO THE SUPPORT THEREOF.

(30) Priorité: 30.05.2003 FR 0306563
(43) Date de publication de la demande: 15.03.2006
(73) Titulaire: VALEO EQUIPEMENTS ELECTRIQUES MOTEUR, 94017 Creteil (FR)
(72) Inventeur: DE GODOY, Marcos, Jardim Sao Paulo - Americana - SP (BR); DROZDEK, Marius, F-38280 Villette D'Anthon (FR)
(74) Mandataire: Gamonal, Didier
(86) Numéro de dépôt international: PCT/FR2004/001341
(87) Numéro de publication internationale: WO 2004/113716

(56) Documents cités:
- US-A- 5 113 104
- US-A- 5 943 909
- US-A1- 2002 103 051

## Description

### Domaine technique de l'invention

L'invention est relative à un dispositif de positionnement angulaire d'un démarreur sur le support d'interface avec le moteur thermique à combustion du véhicule, et comprenant des moyens d'indexage agencés sur la culasse tubulaire de l'inducteur du moteur électrique, et le support de manière à immobiliser l'inducteur en rotation, et à l'orienter angulairement par rapport au support.

### Etat de la technique

Un démarreur de véhicule est constitué de plusieurs sous-ensembles, comprenant un moteur électrique, un contacteur de commande, et un lanceur associé au pignon d'entraînement de la couronne dentée du véhicule. Le contacteur possède une double fonction d'alimentation du moteur électrique en courant issu de la batterie, et d'actionnement d'un levier pour le déplacement axial du lanceur vers une position active du pignon d'entraînement. Le moteur électrique est composé d'un inducteur fixe formant le stator, et d'un induit rotatif constituant le rotor accouplé au lanceur. L'inducteur est doté d'une culasse métallique tubulaire, laquelle porte soit des aimants permanents, soit des bobines inductrices logées dans un circuit magnétique.

Le démarreur est fixé sur le moteur thermique à combustion du véhicule par l'intermédiaire d'un support servant d'interface et de bride de fixation. Le moteur électrique du démarreur est positionné sur le support par l'intermédiaire de la culasse constituant l'enveloppe extérieure du moteur électrique. La fixation du moteur électrique sur le support s'effectue au moyen de tirants formés par des grandes vis longitudinales se vissant dans le support.

La culasse du moteur électrique constitue une enveloppe tubulaire indexée en rotation par rapport au support. L'indexage de la culasse permet d'obtenir les fonctions suivantes :
- immobilisation en rotation de l'inducteur, lequel est sollicité par le couple du moteur et les vibrations ;
- orientation angulaire précise des tirants par rapport au support;
- orientation angulaire précise du câble d'alimentation entre le contacteur et le collecteur du moteur électrique;
- orientation précise des organes internes au moteur électrique par rapport aux autres pièces côté support (levier, dégagements divers).

Différents types d'indexages sont utilisés dans les démarreurs de l'art antérieur:
Dans un premier type d'indexage connu, la culasse comporte une encoche en forme de U qui s'emboîte axialement sur un index saillant du support. Cet index peut faire partie monobloc du support, ou être constitué d'une pièce intermédiaire rapportée sur le support. L'index solidaire du support a une position angulaire fixe et figée par rapport au support. Une position angulaire ajustable de la culasse par rapport au support est alors impossible, ce qui peut constituer un inconvénient en fonction de la position des tirants de fixation du démarreur sur certains moteurs thermiques. Le changement de la position angulaire des tirants nécessite une autre référence de culasse, avec des risques de perturbation du flux de production suite aux changements de références. Ces changements de références impliquent des outillages spécifiques, et donc des coûts supplémentaires. D'autre part, l'index saillant du support gêne considérablement les opérations d'usinage internes du support ou de la face d'appui de la culasse sur le support.

Dans un deuxième type d'indexage connu, la culasse comporte une protubérance radiale qui se loge axialement dans une encoche radiale du support. Cette encoche est généralement intégrée au support, et crée une surépaisseur extérieure au support qui peut gêner l'environnement du support sur le moteur thermique.

Le brevet US 5,943,909 décrit un démarreur comprenant un induit monté de manière rotative dans une culasse et une pluralité d'aimants inducteurs fixés à la culasse autour de l'induit. La culasse est montée dans un boîtier interposé entre cette culasse et un support. Ce boîtier présente une paroi cylindrique et une paroi transversale. Un flasque est assemblé angulairement avec le boîtier.

La demande de brevet JP 2001 / 115 934 décrit un démarreur comportant un moteur électrique logé dans une culasse.

### Objet de l'invention

Un but de l'invention est de procurer un dispositif de positionnement angulaire prédéterminé de la culasse du moteur électrique par rapport au support du démarreur, en utilisant une culasse standard, et un encombrement réduit au niveau de la zone d'indexage.

L'invention concerne un dispositif tel que défini dans la revendication 1.

L'usage d'un ergot d'indexage axial ne crée pas de surépaisseur radiale, permettant de bénéficier d'un encombrement réduit au niveau de la zone d'indexage de la culasse dans le support.

La fonction d'orientation angulaire est reportée sur le support d'interface ayant une ou plusieurs encoches de réception de l'ergot axial. La ou les encoches sont intégrées dans l'alvéole circulaire du support

Selon un mode de réalisation préférentiel, l'ergot est séparé de l'encoche par un jeu pour créer un orifice de sortie autorisant l'évacuation d'eau vers l'extérieur du démarreur. L'évacuation d'eau s'effectue soit à travers une chicane, soit directement à travers l'orifice de sortie. Un tel dispositif permet d'éviter la formation d'un orifice d'évacuation spécial dans la culasse ou dans le support.

### Description sommaire des dessins

D'autres avantages et caractéristiques ressortiront plus clairement de la description qui va suivre d'un mode de réalisation de l'invention donné à titre d'exemple non limitatif, et représenté aux dessins annexés dans lesquels:
- la figure 1 est une vue éclatée en perspective de la culasse et du support d'un démarreur équipé du dispositif d'indexage selon l'invention;
- la figure 2 montre une vue identique de la figure 1, après assemblage de la culasse sur le support;
- la figure 3 représente une vue en plan de la figure 2;
- la figure 4 est une vue en coupe selon la ligne 4-4 de la figure 3;
- les figures 5 à 8 illustrent des vues partielles de la figure 4 de différentes variantes de réalisation utilisant la zone d'indexage pour créer une évacuation d'eau susceptible de s'accumuler à l'intérieur du démarreur.

### Description d'un mode de réalisation préférentiel

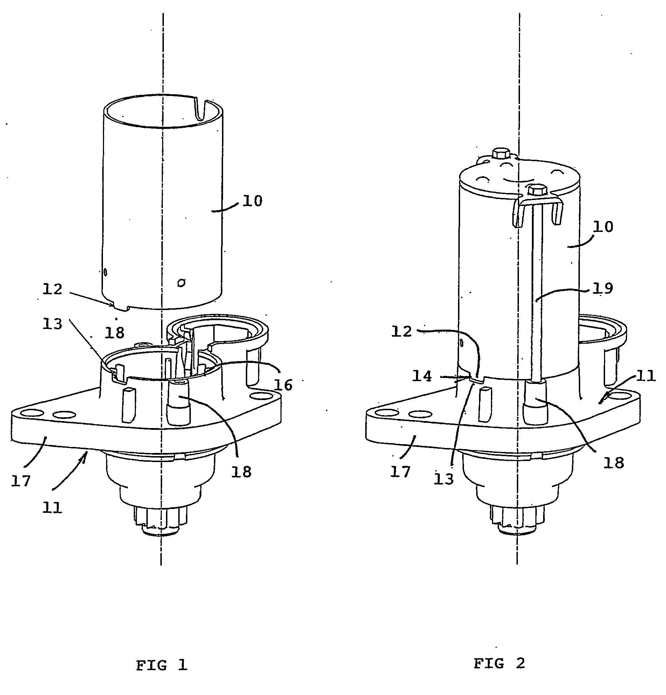

Sur les figures 1 à 4, le positionnement angulaire de la culasse 10 du moteur électrique par rapport au support 11 d'interface entre le démarreur et le moteur thermique du véhicule, est assuré par un ergot 12 axial solidaire de la culasse 10 et destiné à s'engager par coulissement dans une encoche 13 du support 11 pour créer une zone d'indexage 14.

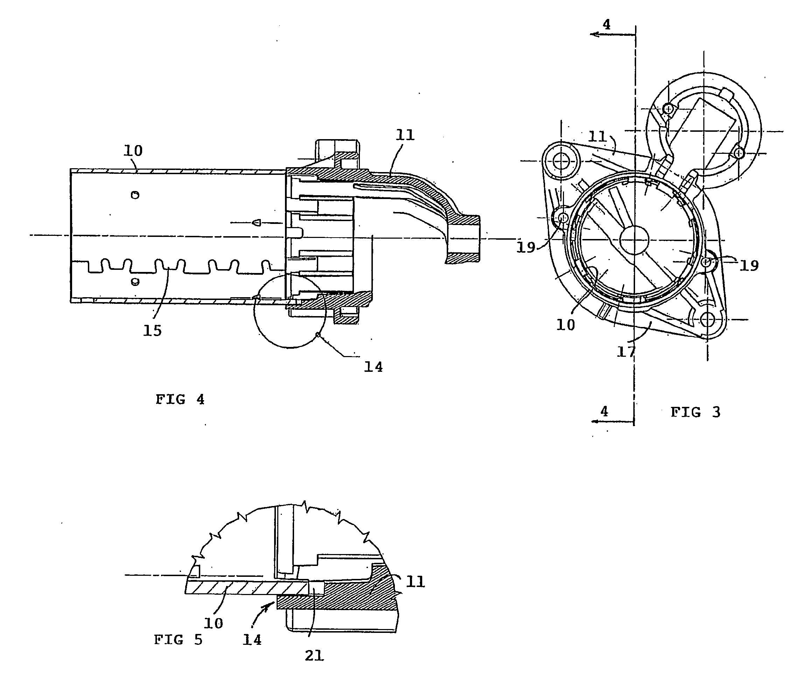

L'ergot 12 est agencé sur l'une des faces frontales en bout de la culasse 10, et présente par exemple un profil sensiblement rectangulaire ayant une longueur de quelques millimètres faisant saillie de la face frontale en s'étendant selon une direction parallèle à l'axe de la culasse 10. L'ergot 12 axial est obtenu lors de la découpe et roulage d'une tôle métallique en acier doux constituant la culasse 10. Après roulage, les deux extrémités longitudinales de la tôle sont assemblées l'une à l'autre par des moyens d'agrafage 15 (figure 4).

La culasse 10 est ainsi une pièce standard pour tous les moteurs électriques de même puissance, la modification de l'orientation étant obtenue par la position angulaire de l'encoche 13 dans l'alvéole 16 circulaire du support 11. Cette standardisation de la culasse pour différents type de démarreurs électriques de même puissance permet de réduire considérablement le coût de réalisation d'un tel démarreur. La fonction d'orientation angulaire est reportée sur le support 11 d'interface, dont la bride de fixation 17 est déjà spécifique à chaque type de bloc moteur à combustion. L'encoche 13 intégrée dans l'alvéole 16 du support 11 ne forme pas de surépaisseur radiale pour la réception de l'ergot 12 axial. Il en résulte un encombrement réduit au niveau de la zone d'indexage 14 de la culasse 10 dans le support 11.

La bride de fixation 17 du support 11 comporte des logements 18 taraudés diamétralement opposés pour la réception d'une paire de tirants 19 à extrémités filetées destinés à solidariser le moteur électrique au support 11. On remarque que la zone d'indexage 14 est décalée angulairement des logements 18 par des secteurs angulaires spécifiques à chaque type de bloc moteur. Les fonctions d'indexage et de fixation sont séparées l'une de l'autre améliorant les opérations de montage du démarreur.

II est clair que le support 11 peut être équipé de plusieurs encoches 13 décalées angulairement à intervalles prédéterminés dans l'alvéole 16. En fonction de l'orientation angulaire souhaitée, l'ergot 12 de la culasse 10 sera introduit dans l'une de ces encoches 13.

L'étanchéité d'un démarreur n'est pas totale, suite à la présence de différentes ouvertures dans la culasse du moteur électrique, ayant pour fonctions:
- l'évacuation des corps étrangers, notamment de la poussière, l'eau d'infiltration, et la condensation interne à l'appareil;
- la ventilation et la mise à l'air libre du moteur électrique, toute machine tournante en fonctionnement créant un flux d'air et donc d'éventuelles surpressions internes.

Le cas le plus simple consiste à prévoir un orifice de sortie dans la culasse du moteur électrique. L'orifice est positionné à un point bas du démarreur monté en position sur le véhicule, de manière à autoriser l'évacuation directe naturelle de l'eau par effet de gravité.

En référence aux figures 5 à 8, la zone d'indexage 14 selon l'invention peut également être agencée pour évacuer l'eau pouvant pénétrer accidentellement dans le démarreur, notamment à l'occasion de projection d'eau lors du roulage du véhicule sur une route mouillée, ou d'un lavage par un jet à haute pression. Il suffit de prévoir un léger jeu formant un orifice 21 entre l'ergot 12 et l'encoche 13 pour réaliser cette fonction additionnelle.

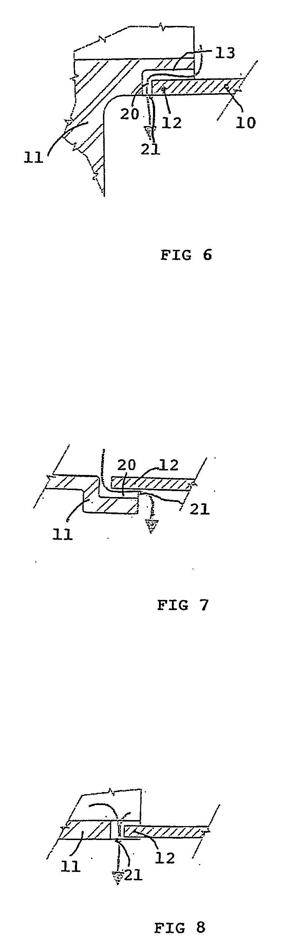

Sur les figures 5 à 7, l'évacuation de l'eau vers l'extérieur s'effectue à travers une chicane 20 en prévoyant un jeu dans le sens axial et radial entre l'ergot 12 et l'encoche 13. L'orifice de sortie 21 est axial sur le dispositif de la figure 5 ou 7, et radial sur la figure 6 ou 8.

Ainsi, ce jeu de montage entre l'ergot et l'encoche présente l'avantage de ne pas utiliser de pièce supplémentaire en forme de chicane qui complique le procécé de montage du démarreur et induit des coûts supplémentaires.

Sur la figure 8, l'évacuation est directe à travers l'orifice de sortie 21 délimité par le jeu axial entre l'extrémité de l'ergot 12 et le fond de l'encoche 13.

## Revendications

1. Dispositif de positionnement angulaire d'un démarreur sur le support (11) d'interface avec un moteur thermique à combustion du véhicule, et comprenant des moyens d'indexage agencés sur une culasse tubulaire formée d'une tôle métallique découpée et roulée (10) d'un inducteur du moteur électrique, et sur le support (11) de manière à immobiliser l'inducteur en rotation, et à l'orienter angulairement par rapport au support (11),
**caractérisé en ce que** les moyens d'indexage comportent au moins un ergot (12) axial solidaire de la culasse (10), et destiné à s'engager dans une encoche (13) complémentaire ménagée dans le support (11) pour créer une zone d'indexage (14) sans surépaisseur radiale, et **en ce que** l'ergot (12) est agencé en saillie sur l'une des faces frontales de la culasse (11) en bout de cette culasse (10).

2. Dispositif de positionnement angulaire selon la revendication 1, **caractérisé en ce que** la fonction d'orientation angulaire est reportée sur le support (11) d'interface ayant une ou plusieurs encoches (13) de réception de l'ergot (12) axial.

3. Dispositif de positionnement angulaire selon la revendication 1, **caractérisé en ce que** l'encoche (13) est intégrée dans une alvéole (16) circulaire du support (11).

4. Dispositif de positionnement angulaire selon l'une des revendications précédentes **caractérisé en ce que** l'ergot a un profil sensiblement rectangulaire.

5. Dispositif de positionnement angulaire selon l'une quelconque des revendications précédentes, **caractérisé en ce que** le support (11) présente une bride de fixation (17) comporte des logements taraudés (18) et **en ce que** la zone d'indexage (14) est décalée angulairement par rapport aux logements (18).

6. Dispositif de positionnement angulaire selon l'une quelconque des revendications précédentes, **caractérisé en ce que** le support (11) comporte plusieurs encoches (13), l'ergot (12) étant introduit dans l'une de ces encoches.

7. Dispositif de positionnement angulaire selon l'une quelconque des revendications précédentes, **caractérisé en ce que** l'ergot (12) est séparé de l'encoche (13) par un jeu pour créer un orifice de sortie (21) autorisant l'évacuation d'eau vers l'extérieur du démarreurs.

8. Dispositif de positionnement angulaire selon la revendication 7, **caractérisé en ce que** l'évacuation d'eau s'effectue à travers une chicane (20).

9. Dispositif de positionnement angulaire selon la revendication 1, **caractérisé en ce que** l'évacuation d'eau est directe à travers l'orifice de la sortie (21).

## Claims

1. Device for the angular positioning of a starter on a support (11) for interface with the thermal combustion engine of the vehicle and comprising positive location means arranged on a tubular casing (10), formed from a cropped and rolled metal sheet, of a field winding of the electric motor, and on the support (11), so as to immobilise the field winding with respect to rotation and to orient it angularly with respect to the support (11),
**characterised in that** the positive location means comprise at least one axial lug (12) fixed to the casing (10), and intended to engage in a complementary notch (13) provided in the support (11) in order to create a positive location area (14) without radial protrusion, and **in that** the lug (12) is arranged projecting on one of the front faces of the casing (10) at the end of this casing (10).

2. Angular positioning device according to claim 1, **characterised in that** the angular orientation function is transferred to the interface support (11) having one or more notches (13) receiving the axial lug (12).

3. Angular positioning device according to claim 1, **characterised in that** the notch (13) is integrated in a circular alveolus (16) in the support (11).

4. Angular positioning device according to one of the preceding claims, **characterised in that** the lug has a substantially rectangular profile.

5. Angular positioning device according to any one of the preceding claims, **characterised in that** the support (11) has a fixing flange (17) and comprises threaded housings (18) and **in that** the positive location area (14) is offset angularly with respect to the housings (18).

6. Angular positioning device according to any one of the preceding claims, **characterised in that** the support (11) comprises several notches (13), the lug (12) being introduced into one of these notches.

7. Angular positioning device according to any one of the preceding claims, **characterised in that** the lug (12) is separated from the notch (13) by a clearance in order to create an outlet orifice (21) allowing the discharge of water to the outside of the starter.

8. Angular positioning device according to claim 7, **characterised in that** the discharge of water takes place through a baffle (20).

9. Angular positioning device according to claim 7, **characterised in that** the discharge of water is direct through the orifice of the outlet (21).

## Patentansprüche

1. Vorrichtung zur Winkelpositionierung eines Anlassers auf dem Träger (11) zum Anschluss an einen KFZ-Verbrennungsmotor mit Indexierungsmitteln, die auf einem aus einem gestanzten und rundgebogenem Metallblech bestehenden, rohrförmigen Gehäuseteil (10) eines Induktors des Elektromotors und auf dem Träger (11) angeordnet sind, um den Induktor gegen Verdrehung zu sichern und ihn im Verhältnis zum Träger (11) winklig auszurichten,
**dadurch gekennzeichnet, dass** die Indexierungsmittel wenigstens eine axiale Nase (12) umfassen, die fest mit dem Gehäuseteil (10) verbunden und dazu bestimmt ist, in eine komplementäre Ausnehmung (13) einzugreifen, die im Träger (11) ausgebildet ist, um einen Indexierungsbereich (14) ohne radiale Erhebung zu bilden, und **dass** die Nase (12) vorstehend auf einer der stirnseitigen Flächen des Gehäuseteils (11) am Ende dieses Gehäuseteils (10) angeordnet ist.

2. Vorrichtung zur Winkelpositionierung nach Anspruch 1, **dadurch gekennzeichnet, dass** die Winkelausrichtungsfunktion dem Anschlussträger (11) zugewiesen ist, der eine oder mehrere Ausnehmungen (13) für die Aufnahme der axialen Nase (12) aufweist.

3. Vorrichtung zur Winkelpositionierung nach Anspruch 1, **dadurch gekennzeichnet, dass** die Ausnehmung (13) in einen kreisförmigen Hülsenteil (16) des Trägers (11) eingearbeitet ist.

4. Vorrichtung zur Winkelpositionierung nach einem der vorangehenden Ansprüche, **dadurch gekennzeichnet, dass** die Nase ein in etwa rechteckiges Profil hat.

5. Vorrichtung zur Winkelpositionierung nach einem der vorangehenden Anspruche, **dadurch gekennzeichnet, dass** der Träger (11) einen Befestigungsflansch (17) mit Gewindeaufnahrnen (18) aufweist und **dass** der Indexierungsbereich (14) im Verhältnis zu den Aufnahmen (18) winklig versetzt ist.

6. Vorrichtung zur Winkelpositionierung nach einem der vorangehenden Ansprüche, **dadurch gekennzeichnet, dass** der Träger (11) mehrere Ausnehmungen (13) aufweist, wobei die Nase (12) in eine dieser Ausnehmungen eingesetzt wird.

7. Vorrichtung zur Winkelpositionierung nach einem der vorangehenden Ansprüche, **dadurch gekennzeichnet, dass** die Nase (12) von der Ausnehmung (13) durch ein Spiel getrennt ist, um eine Auslassöffnung (21) zu bilden, welche die Ableitung von Wasser aus dem Anlasser heraus ermöglicht.

8. Vorrichtung zur Winkelpositionierung nach Anspruch 7, **dadurch gekennzeichnet, dass** die Wasserabaleitung über eine Schikane (20) erfolgt.

9. Vorrichtung zur Winkelpositioierung nach Anspruch 7, **dadurch gekennzeichnet, dass** die Wasserableitung direkt durch die Auslassöffnung (21) hindurch erfolgt.
